# EUROPEAN PATENT APPLICATION

(11) **EP 1 726 688 A1**
(43) Date of publication of application: **29.11.2006**
(21) Application number: 06252561.3
(22) Date of filing: 17.05.2006
(51) Int. Cl.: C23F 11/10, C23F 11/18, C01F 17/00

(54) **Cerium ion-containing solution and corrosion inhibitor**

(30) Priority: 23.05.2005 JP 2005149632; 23.05.2005 JP 2005149648; 23.05.2005 JP 2005149708
(71) Applicant: Shin-Etsu Chemical Co., Ltd., Chiyoda-ku, Tokyo (JP)
(72) Inventor: Nakayama, Junichi c/o Takefu Plant, Echizen-shi, Fukui-ken (JP)
(74) Representative: Stoner, Gerard Patrick

(57) **Abstract**

A trivalent cerium ion-containing solution is provided comprising (A) trivalent cerium ions, and (B) a substance selected from (i) an organic acid or salt thereof having a reducing action in an acidic region, (ii) a non-organic acid substance having a reducing action in an acidic region, and (iii) a substance having a chelating action in an acidic region. Trivalent cerium ions remain stable without precipitation of cerium compounds when the solution is processed in a neutral to weakly acidic region. The solution is useful as a corrosion inhibitor.

## Description

This invention relates to a trivalent cerium ion-containing solution in which trivalent cerium ions remain stable without precipitation of cerium compounds when it is processed in a neutral to weakly acidic region as an industrial raw material or treating agent, and a corrosion inhibitor.

### BACKGROUND

Rare earth elements including cerium are often handled as aqueous solutions of inorganic acid salts when the rare earth elements are separated and refined from ores. Also in the subsequent process of preparing various compounds such as oxides, carbonates and chlorides from the separated rare earth elements, they are often handled as aqueous solutions of inorganic acid salts. Additionally, as a convenient means of adding rare earth elements, they are often added in the form of inorganic acid salt solutions. The inorganic acid salts commonly used include chlorides, nitrates and sulfates. Organic acid salts such as acetates are also used when inorganic acid salts are unwanted.

Among the rare earth elements, cerium exhibits unique properties and in aqueous solution form, takes a valence of three and four. Among the salts, cerium chloride is trivalent in aqueous solution whereas cerium sulfate and cerium nitrate are both trivalent and tetravalent. When trivalent sulfate or nitrate aqueous solution are to be handled with the trivalent state kept stable, they are maintained at a pH level less than or equal to 4, preferably less than or equal to 2. This is simply accomplished by the presence of an appropriate excess of nitric acid or sulfuric acid. On a more basic side than pH 4, cerium hydroxide or the like is likely to precipitate as solids. Caution is required in handling a cerium salt aqueous solution at pH 4 or above on an industrial scale.

When trivalent cerium inorganic acid salts are handled as an intermediate, the presence of excess acid may cause some inconvenience. When cerium is recovered from a cerium salt aqueous solution by adding oxalic acid as a precipitant to form an oxalate salt, the excess acid causes to reduce percent yields. To avoid a yield reduction, an extra step of neutralizing the excess acid with ammonia or the like is newly needed. When ceramics are prepared by adding trivalent cerium salt aqueous solution to powdered ceramic sources such as alumina, mixing and sintering, the excess acid is not preferred for metal members of the apparatus. The use of organic acid salts may give rise to other problems, typically the odor of excess acetic acid.

When minute amounts of rare earth elements are to be added, it is a common practice to add a predetermined amount of a dilute solution of rare earth salt. However, problems arise on use in a thin cerium concentration region. As a cerium salt solution having a pH or concentration enough to prevent formation of cerium hydroxide or the like is diluted with water, the pH may approach to the basic side at which cerium hydroxide or the like will precipitate. Also, when a dilute solution is formed by dissolving a substantial amount of cerium inorganic acid salt (solid) in water, there is a likelihood that cerium hydroxide or the like precipitates. Especially when the aqueous solution is heated, precipitation is facilitated.

Cerium is expected to serve as a cathode inhibitor which is one of corrosion inhibitors. Candidates include dilute (0.01 to 1%) solutions of cerium salts such as cerium chloride (CeCl₃), cerium nitrate (Ce(NO₃)₃) or cerium acetate (Ce(CH₃COO)₃). In the case of long-term storage, a possibility of precipitation increases with the passage of time.

With respect to the stabilization of cerium ions, JP-A 2004-307343 recommends use of an aqueous solution of "a trivalent cerium salt of a reducing organic acid having at least three coordination sites." It is described that even cerium salts containing a reducing organic acid and an organic acid other than the reducing organic acid are useful. In view of the description in [0017] that "a molar ratio of ascorbic acid to lactic acid is preferably from about 1:2 to 1:2.6 for satisfying both a solubility and dissolution stability," the description in [0020] that "the coordination of ascorbic acid having reducing nature in an aqueous solution restrains the trivalent cerium ion from being oxidized to tetravalent form," and Examples, it is believed that the reducing organic acid is necessary in at least one-fold molar amount (equimolar amount) relative to the cerium. Using the reducing organic acid in a four-fold molar amount or at least one-fold molar amount is undesired from the economical and environmental standpoints. When oxidation/reduction is involved in the cerium use process, the presence of such a large amount of reducing organic acid can be a restraint factor. In addition, the preparation of organic acid salt aqueous solutions by reaction of cerium carbonate with organic acids is more expensive than the preparation of organic acid salt aqueous solutions by reaction of cerium carbonate with inexpensive acids such as nitric acid and hydrochloric acid, and thus commercially disadvantageous. It is impossible to form high concentration solutions of organic acid salts as suggested in the patent.

An object of the present invention is to provide cerium ion-containing solutions with fewer restraint factors, and preferably in which trivalent cerium ions remain stable even at pH 1 or above, typically pH 2 or above, and more typically pH 4-7; and a corresponding corrosion inhibitor composition and use thereof.

The inventor has found that using any one of the following components (i) to (iii), trivalent cerium ions can be kept fully stable in a region of pH 1 to 7, typically pH 2 to 7.

The invention provides a cerium ion-containing solution and a corrosion inhibitor, as defined below.
[1] A trivalent cerium ion-containing solution comprising (A) trivalent cerium ions, and (B) a substance selected from the group consisting of (i) an organic acid or salt thereof having a reducing action in an acidic region and being present in a concentration giving a molar ratio relative to the cerium ions in the range from 0.001 to less than 1, (ii) a non-organic acid substance having a reducing action in an acidic region, and (iii) a substance having a chelating action in an acidic region.
[2] The solution of [1] which is at pH 1 to 7.
[3] The solution of [1] or [2] wherein the cerium ions are present in a concentration of 0.0001 to 2 mole/liter.
[4] The solution of [1] wherein the organic acid or salt thereof having a reducing action (i) has a reduction potential of less than or equal to 0.3 eV.
[5] The solution of [4] wherein the organic acid or salt thereof having a reducing action (i) is selected from the group consisting of L-ascorbic acid, malic acid, citric acid, tartaric acid, oxalic acid, glucuronic acid, gallic acid, glyceric acid, hydroxybutyric acid, glyoxylic acid, and salts thereof.
[6] The solution of [1] wherein the non-organic acid substance having a reducing action (ii) is selected from the group consisting of hydroxylammonium chloride, sodium thiosulfate, and ammonium fluoride.
[7] The solution of [1] wherein the substance having a chelating action (iii) is selected from the group consisting of polyaminocarboxylic acids, oxycarboxylic acids, and phosphoric acids.
[8] The solution of [7] wherein the substance having a chelating action (iii) is selected from the group consisting of EDTA (ethylenediaminetetraacetic acid),
   CyDTA (t-cyclohexane-1,2-diaminetetraacetic acid),
   EGTA (ethylene glycol bis(2-aminoethyl ether)-N,N,N',N'-tetraacetic acid),
   DTPA (diethylenetriaminepentaacetic acid),
   TTHA (triethylenetetramine-N,N,N',N',N",N",N"',N"'-hexaacetic acid),
   NTA (nitrilotriacetic acid), KCN, TEA (triethanolamine),
   HEDTA (N-(2-hydroxyethyl)ethylenediaminetriacetic acid),
   MGDA (methylglycine diacetic acid),
   GLDA (sodium dicarboxymethyl glutamic acid tetraacetate),
   EDDS (trisodium ethylenediaminedisuccinate),
   DHEDDA (dihydroxyethylethylenediaminediacetic acid),
   PDTA (1,3-propanediaminetetraacetic acid),
   HIMDA (hydroxyethyliminodiacetic acid),
   ASDA (L-aspartic acid-N,N-diacetic acid),
   NTMP (aminotrimethylenephosphonic acid),
   HEDP (hydroxyethanediphosphonic acid), acetylacetone, and salts thereof.
[9] The solution of [1] wherein the substance having a reducing action (i) and/or (ii) is present along with the substance having a chelating action (iii).
[10] The solution of [9] wherein the substance having a reducing action is selected from the group consisting of L-ascorbic acid, malic acid, citric acid, tartaric acid, oxalic acid, glucuronic acid, gallic acid, glyceric acid, hydroxybutyric acid, glyoxylic acid, hydroxylammonium chloride, sodium thiosulfate, and salts of the foregoing acids.
[11] The solution of any one of [1] to [10] which is a solution of a cerium salt of inorganic acid.
[12] The solution of any one of [1] to [10] which is an aqueous solution of a cerium salt of inorganic acid.
[13] A corrosion inhibitor comprising the cerium ion-containing solution of any one of [1] to [12].

Methods of preparation and use of these are further aspects of the invention.

We find that such cerium ion-containing solutions and corrosion inhibitors comprising the same have the advantage that trivalent cerium ions remain stable in a region of pH 1 to 7, typically pH 2 to 7, preventing any cerium compound from precipitating.

### FURTHER EXPLANATIONS; OPTIONS AND PREFERENCES

One embodiment of the invention is a trivalent cerium ion-containing solution comprising
(A) trivalent cerium ions, and
(B) a substance selected from the group consisting of
   (i) an organic acid or salt thereof having a reducing action in an acidic region,
   (ii) a non-organic acid substance having a reducing action in an acidic region, and
   (iii) a substance having a chelating action in an acidic region.

In the industry, the trivalent cerium ion-containing solution is used not only as aqueous solution, but also as solutions in organic solvents, typically ethanol and other alcohols. The invention is not limited to a particular type of solvent.

As to the organic acid or salt thereof having a reducing action in an acidic region (i), a multiplicity of such organic acids and salts are known. While the acids exhibit a complex behavior in cerium ion solution, those having an oxidation/reduction potential of less than or equal to 0.3 eV are preferred. Examples include, but are not limited to, L-ascorbic acid, malic acid, citric acid, tartaric acid, oxalic acid, glucuronic acid, gallic acid, glyceric acid, hydroxybutyric acid, glyoxylic acid, and the like, and salts of the foregoing acids. Suitable salts include, but are not limited to, salts of alkali metals such as sodium and potassium, salts of alkaline earth metals such as magnesium, ammonium salts, amine salts, and the like. Those acids and salts which can be dissolved in the cerium ion-containing solution at pH 2 to 7 are preferred.

As to the non-organic acid substance having a reducing action in an acidic region (ii), a multiplicity of such substances are known. While the substances exhibit a complex behavior in cerium ion solution, those having an oxidation/reduction potential of less than or equal to 0.3 eV are preferred. Examples include, but are not limited to, hydroxylammonium chloride, sodium thiosulfate, ammonium fluoride, and the like.

As to the substance having a chelating action in an acidic region (iii), a multiplicity of such substances are known. Examples of the substance having a chelating action include polyaminocarboxylic acids, oxycarboxylic acids, phosphoric acids, and the like. Specific examples include, but are not limited to,
EDTA (ethylenediaminetetraacetic acid),
CyDTA (t-cyclohexane-1,2-diaminetetraacetic acid),
EGTA (ethylene glycol bis(2-aminoethyl ether)-N,N,N',N'-tetraacetic acid),
DTPA (diethylenetriaminepentaacetic acid),
TTHA (triethylenetetramine-N,N,N',N',N",N",N"',N"'-hexaacetic acid),
NTA (nitrilotriacetic acid), KCN, TEA (triethanolamine),
HEDTA (N-(2-hydroxyethyl)ethylenediaminetriacetic acid),
MGDA (methylglycine diacetic acid),
GLDA (sodium dicarboxymethyl glutamic acid tetraacetate),
EDDS (trisodium ethylenediaminedisuccinate),
DHEDDA (dihydroxyethylethylenediaminediacetic acid),
PDTA (1,3-propanediaminetetraacetic acid),
HIMDA (hydroxyethyliminodiacetic acid),
ASDA (L-aspartic acid-N,N-diacetic acid),
NTMP (aminotrimethylenephosphonic acid),
HEDP (hydroxyethanediphosphonic acid), acetylacetone, and
alkali metal or alkaline earth metal salts of the foregoing.

Better results can be obtained when the substance having a reducing action (i) or (ii) or both is present along with the substance having a chelating action (iii). Examples of the substance having a reducing action which can be combined with the substance (iii) include, but are not limited to, L-ascorbic acid, malic acid, citric acid, tartaric acid, oxalic acid, glucuronic acid, gallic acid, glyceric acid, hydroxybutyric acid, glyoxylic acid, hydroxylammonium chloride, sodium thiosulfate, and salts of the foregoing acids.

Industrially a trivalent cerium salt aqueous solution may be prepared by dissolving cerium carbonate, cerium hydroxide, cerium oxide in aqueous inorganic acids such as hydrochloric acid and nitric acid. After filtration of the mixture, the filtrate may be used as the solution. Alternatively, the mixture is evaporated to dryness, whereupon the chloride or nitrate in solid form is ready for use. That is, the inorganic salt aqueous solution may be available as the filtrate resulting from decomposition or be obtained by dissolving the solid again. An organic solvent solution of inorganic salt may be readily obtained by dissolving the solid in an organic solvent such as an alcohol. However, the invention is not limited to a particular route of solution preparation.

The behavior of the trivalent cerium salt solution is as follows. It is believed that in the presence of excess acid, that is, in an acidic side of lower pH, chloride, nitrate or similar ions collect in proximity to cerium ions, surrounding and guarding the cerium ions, and excess H₃O⁺ ions exert more or less oxidation-inhibitory effect. Thus, cerium remains trivalent and steady in a low pH region. However, in a weakly acidic region, for example, at pH 1 or higher, there is an increased possibility of precipitation during long-term storage and processing steps such as dilution and heating. Our new proposals are found effective in a weakly acidic to neutral region of pH 1 to 7, especially pH 2 to 7.

As regard to the amount of the substance having a reducing or chelating action present in the trivalent cerium salt solution, a higher concentration is, of course, more effective for stabilizing trivalent cerium ions, but abundant use is problematic in cost and environment contamination, and can be an impeding factor when the solution is used as a cathode inhibitor (which is one type of corrosion inhibitor). It is thus preferred to use a necessary minimum compatible amount of the substance having a reducing or chelating action.

Experiments were run to determine the lower limit of the amount of the substance having a reducing or chelating action added to the cerium ion solution in a region of pH 1 to 7, especially pH 2 to 7. In the case of component (i), effectiveness is demonstrated at a molar ratio of the substance to cerium of from 0.001:1 to less than 1:1, preferably from 0.05:1 to less than 1:1. Preferably the upper limit is set to be a less than one-fold molar ratio relative to the molar amount of cerium, as determined from the standpoints of economy, environment and impeding action rather than the cerium concentration. We have noted benefits of the invention with a molar ratio of less than or equal to 0.9-fold, especially less than or equal to 0.5-fold relative to the molar amount of cerium.

In the case of component (ii), effectiveness was demonstrated at a molar ratio of the substance to cerium of at least 0.001:1, preferably at least 0.05:1. The upper limit is determined from the standpoints of economy, environment and impeding action rather than the cerium concentration. The upper limit is typically a 3-fold molar ratio, especially 2-fold molar ratio relative to the molar amount of cerium although a higher level within the permissible range may be set.

In the case of component (iii), effectiveness was demonstrated at a molar ratio of the substance to cerium of at least 0.001:1, preferably at least 0.05:1. The upper limit is determined from the standpoints of economy, environment and impeding action rather than the cerium concentration. The upper limit is typically a 3-fold molar ratio, especially 2-fold molar ratio relative to the molar amount of cerium although a higher level within the permissible range may be set.

When the substance having a reducing action (i) or (ii) and the substance having a chelating action (iii) are used in combination, they are preferably used in such total amounts to provide a 0.001-fold or greater molar ratio, especially a 0.05-fold or greater molar ratio relative to the molar amount of cerium. They are preferably used in such total amounts to provide a 1-fold or less molar ratio, especially a 0.5-fold or less molar ratio relative to the molar amount of cerium.

The substance having a reducing or chelating action may be added during or after the decomposition of a cerium raw material, typically cerium carbonate, or before or after the decomposition liquid is diluted with deionized water to a several fold to several ten fold volume, or before the liquid is heated at a temperature of 30 to 90°C. When a solution is prepared by dissolving a cerium salt, the substance having a reducing or chelating action may be added before a possibility of cerium precipitation emerges. The invention is not limited with respect to the time of addition.

The concentration of cerium ions can be 2 mole/liter or higher because of a high solubility of inorganic acid salts. The acceptable concentration range of the inventive solution can be significantly higher than that of organic acid salts. The cerium ion-containing solution preferably has a trivalent cerium ion concentration of 0.0001 to 2 mole/liter, more preferably 0.001 to 1 mole/liter.

In the cerium ion-containing solution of the invention to which an appropriate amount of the substance having a reducing or chelating action has been added, no precipitation occurs over a long period of time even when the solution is diluted, heated or otherwise treated. The inventive solution can be used as a corrosion inhibitor where it is often diluted, heated or otherwise treated. The inventive solution is useful when it is desired to add a minute amount of cerium and when it is used as a cathode inhibitor which is one type of corrosion inhibitor.

Desirably, the trivalent cerium ion-containing solution of the invention is kept in the dark for benign storage over a long period of time.

### EXAMPLE

Examples and Comparative Examples are given below by way of illustration and not by way of limitation.

### Example 1

(1) The starting material used was cerium carbonate (with a purity of 50 wt% CeO₂) and 606 g thereof was weighed.
(2) 0.3 g (0.001 mole per mole of Ce) of L-ascorbic acid (with a reduction potential of 0.127 eV at pH 5) was added to 0.3 L of deionized water, followed by agitation for dissolution.
(3) This solution (2) was combined with the cerium carbonate (1), and with agitation, 0.33 L of 67% nitric acid was slowly added thereto for decomposition.
(4) Agitation for about 2 hours yielded a suspension in which some matter was left undissolved. It was suction filtered through a paper filter, recovering 0.97 L of a clear filtrate having pH 3.6 and a Ce concentration of 1.7 mole/L.
(5) A 0.1-L portion was taken from the filtrate and diluted with deionized water to a volume of 1 L. The liquid was heated at 80°C for one hour.
(6) Again, a 0.1-L portion was taken from the liquid (5) and diluted with deionized water to a volume of 1 L. The liquid was heated at 80°C for one hour.
(7) Again, a 0.1-L portion was taken from the liquid (6) and diluted with deionized water to a volume of 1 L. The liquid was heated at 80°C for one hour.
(8) The liquids (4) to (7) were stored at room temperature for a certain time while they were examined for precipitation.
(9) As a result, none of the liquids revealed precipitation after 2 weeks.

### Example 2

The procedure of Example 1 was repeated except that 0.9 g (0.003 mole per mole of Ce) of L-ascorbic acid was added in step (2). The liquids were stored for a certain time under observation, finding no precipitates after 2 weeks of storage.

### Example 3

The procedure of Example 1 was repeated except that 3 g (0.01 mole per mole of Ce) of L-ascorbic acid was added in step (2). The liquids were stored for a certain time under observation, finding no precipitates after 2 weeks of storage.

### Example 4

The procedure of Example 1 was repeated except that 30 g (0.1 mole per mole of Ce) of L-ascorbic acid was added in step (2). The liquids were stored for a certain time under observation, finding no precipitates after 2 weeks of storage.

### Example 5

The procedure of Example 1 was repeated except that 270 g (0.9 mole per mole of Ce) of L-ascorbic acid was added in step (2). The liquids were stored for a certain time under observation, finding no precipitates after 2 weeks of storage.

### Example 6

The procedure of Example 1 was repeated except that 3.6 g (0.01 mole per mole of Ce) of citric acid monohydrate was added in step (2). The liquids were stored for a certain time under observation, finding no precipitates after 2 weeks of storage.

### Example 7

The procedure of Example 1 was repeated except that 2.3 g (0.01 mole per mole of Ce) of malic acid was added in step (2). The liquids were stored for a certain time under observation, finding no precipitates after 2 weeks of storage.

### Example 8

The procedure of Example 1 was repeated except that dilute nitric acid was added prior to filtration for adjusting to pH 2.4 in step (4). The liquids were stored for a certain time under observation, finding no precipitates after 2 weeks of storage.

### Example 9

The procedure of Example 1 was repeated except that cerium carbonate was added prior to filtration for adjusting to pH 5.4 in step (4). The liquids were stored for a certain time under observation, finding no precipitates after 2 weeks of storage.

### Comparative Example 1

(1) The starting material used was cerium carbonate (with a purity of 50 wt% CeO₂).
(2) The cerium carbonate was weighed (606 g), added to 0.3 L of deionized water and agitated into a slurry.
(3) With agitation, 0.33 L of 67% nitric acid was slowly added to the slurry for decomposition.
(4) Agitation for about 2 hours yielded a suspension in which some matter was left undissolved. It was suction filtered through a paper filter, recovering 0.95 L of a clear filtrate having pH 3.8 and a Ce concentration of 1.7 mole/L.
(5) A 0.1-L portion was taken from the filtrate and diluted with deionized water to a volume of 1 L. The liquid was heated at 80°C for one hour. At this point, the liquid was at pH 3.8.
(6) Again, a 0.1-L portion was taken from the liquid (5) and diluted with deionized water to a volume of 1 L. The liquid was heated at 80°C for one hour.
(7) Again, a 0.1-L portion was taken from the liquid (6) and diluted with deionized water to a volume of 1 L. The liquid was heated at 80°C for one hour.
(8) The liquids (4) to (7) were stored at room temperature for a certain time while they were examined for precipitation.
(9) As a result, the deposition of precipitates on the container bottom was seen after one day for the liquids (4) and (5) and after 7 days for the liquids (6) and (7).

### Comparative Example 2

The liquids (5) to (7) in Comparative Example 1 were not heated before the storage at room temperature. For all the liquids, the deposition of precipitates on the container bottom was seen after one week.

The results are summarized in Table 1.

**Table 1**

| | Reducing substance | Concentration (molar) ratio of reducing substance/Ce | pH | Precipitates |
|---|---|---|---|---|
| Example 1 | L-ascorbic acid | 0.001 | 3.6 | nil |
| Example 2 | L-ascorbic acid | 0.003 | 3.4 | nil |
| Example 3 | L-ascorbic acid | 0.01 | 3.2 | nil |
| Example 4 | L-ascorbic acid | 0.1 | 2.4 | nil |
| Example 5 | L-ascorbic acid | 0.9 | 1.8 | nil |
| Example 6 | citric acid | 0.01 | 3.2 | nil |
| Example 7 | malic acid | 0.01 | 3.3 | nil |
| Example 8 | L-ascorbic acid | 0.001 | 2.4 | nil |
| Example 9 | L-ascorbic acid | 0.001 | 5.4 | nil |
| Comparative Example 1 | no (heated) | - | 3.8 | found |
| Comparative Example 2 | no (not heated) | - | 3.8 | found |

### Example 10

(1) The starting material used was cerium carbonate (with a purity of 50 wt% CeO₂) and 606 g thereof was weighed.
(2) 0.122 g (0.001 mole per mole of Ce) of hydroxylammonium chloride was added to 0.3 L of deionized water, followed by agitation for dissolution.
(3) This solution (2) was combined with the cerium carbonate (1), and with agitation, 0.33 L of 67% nitric acid was slowly added thereto for decomposition.
(4) Agitation for about 2 hours yielded a suspension in which some matter was left undissolved. It was suction filtered through a paper filter, recovering 0.97 L of a clear filtrate having pH 3.6 and a Ce concentration of 1.7 mole/L.
(5) A 0.1-L portion was taken from the filtrate and diluted with deionized water to a volume of 1 L. The liquid was heated at 80°C for one hour.
(6) Again, a 0.1-L portion was taken from the liquid (5) and diluted with deionized water to a volume of 1 L. The liquid was heated at 80°C for one hour.
(7) Again, a 0.1-L portion was taken from the liquid (6) and diluted with deionized water to a volume of 1 L. The liquid was heated at 80°C for one hour.
(8) The liquids (4) to (7) were stored at room temperature for a certain time while they were examined for precipitation.
(9) As a result, none of the liquids revealed precipitation after 2 weeks.

### Example 11

The procedure of Example 10 was repeated except that 1.22 g (0.01 mole per mole of Ce) of hydroxylammonium chloride was added in step (2). The liquids were stored for a certain time under observation, finding no precipitates after 2 weeks of storage.

### Example 12

The procedure of Example 10 was repeated except that 12.2 g (0.1 mole per mole of Ce) of hydroxylammonium chloride was added in step (2). The liquids were stored for a certain time under observation, finding no precipitates after 2 weeks of storage.

### Example 13

The procedure of Example 10 was repeated except that 122 g (1 mole per mole of Ce) of hydroxylammonium chloride was added in step (2). The liquids were stored for a certain time under observation, finding no precipitates after 2 weeks of storage.

### Example 14

The procedure of Example 10 was repeated except that 2.8 g (0.01 mole per mole of Ce) of sodium thiosulfate was added in step (2). The liquids were stored for a certain time under observation, finding no precipitates after 2 weeks of storage.

### Example 15

The procedure of Example 10 was repeated except that 0.65 g (0.01 mole per mole of Ce) of ammonium fluoride was added in step (2). The liquids were stored for a certain time under observation, finding no precipitates after 2 weeks of storage.

### Example 16

The procedure of Example 14 was repeated except for adjustment to pH 3.8. The liquids were stored for a certain time under observation, finding no precipitates after 2 weeks of storage.

### Example 17

The procedure of Example 10 was repeated except that dilute nitric acid was added for adjusting to pH 2.4 in step (4). The liquids were stored for a certain time under observation, finding no precipitates after 2 weeks of storage.

### Example 18

The procedure of Example 10 was repeated except that cerium carbonate was added for adjusting to pH 5.4 in step (4). The liquids were stored for a certain time under observation, finding no precipitates after 2 weeks of storage.

The results are summarized in Table 2.

**Table 2**

| | Reducing substance | Concentration (molar) ratio of reducing substance/Ce | pH | precipitates |
|---|---|---|---|---|
| Example 10 | hydroxylammonium chloride | 0.001 | 3.6 | nil |
| Example 11 | hydroxylammonium chloride | 0.01 | 3.7 | nil |
| Example 12 | hydroxylammonium chloride | 0.1 | 3.6 | nil |
| Example 13 | hydroxylammonium chloride | 1 | 3.6 | nil |
| Example 14 | sodium thiosulfate | 0.01 | 3.3 | nil |
| Example 15 | ammonium fluoride | 0.01 | 3.8 | nil |
| Example 16 | sodium thiosulfate | 0.01 | 3.8 | nil |
| Example 17 | hydroxylammonium chloride | 0.001 | 2.4 | nil |
| Example 18 | hydroxylammonium chloride | 0.001 | 5.4 | nil |

### Example 19

(1) The starting material used was cerium carbonate (with a purity of 50 wt% CeO₂) and 606 g thereof was weighed.
(2) 0.66 g (0.001 mole per mole of Ce) of disodium ethylenediaminetetraacetate (EDTA-2Na) was added to 0.3 L of deionized water, followed by agitation for dissolution.
(3) This solution (2) was combined with the cerium carbonate (1), and with agitation, 0.33 L of 67% nitric acid was slowly added thereto for decomposition.
(4) Agitation for about 2 hours yielded a suspension in which some matter was left undissolved. It was suction filtered through a paper filter, recovering 0.9 L of a clear filtrate having pH 3.6 and a Ce concentration of 1.9 mole/L.
(5) A 0.1-L portion was taken from the filtrate and diluted with deionized water to a volume of 1 L. The liquid was heated at 80°C for one hour.
(6) Again, a 0.1-L portion was taken from the liquid (5) and diluted with deionized water to a volume of 1 L. The liquid was heated at 80°C for one hour.
(7) Again, a 0.1-L portion was taken from the liquid (6) and diluted with deionized water to a volume of 1 L. The liquid was heated at 80°C for one hour.
(8) The liquids (4) to (7) were stored at room temperature for a certain time while they were examined for precipitation.
(9) As a result, none of the liquids revealed precipitation after 2 weeks.

### Example 20

The procedure of Example 19 was repeated except that 1.97 g (0.003 mole per mole of Ce) of EDTA-2Na was added in step (2). The liquids were stored for a certain time under observation, finding no precipitates after 2 weeks of storage.

### Example 21

The procedure of Example 19 was repeated except that 6.6 g (0.01 mole per mole of Ce) of EDTA-2Na was added in step (2). The liquids were stored for a certain time under observation, finding no precipitates after 2 weeks of storage.

### Example 22

The procedure of Example 19 was repeated except that 66 g (0.1 mole per mole of Ce) of EDTA-2Na was added in step (2). The liquids were stored for a certain time under observation, finding no precipitates after 2 weeks of storage.

### Example 23

The procedure of Example 19 was repeated except that 4.8 g (0.01 mole per mole of Ce) of trisodium nitrilotriacetate (NTA-3Na, MW=275.1) was added in step (2). The liquids were stored for a certain time under observation, finding no precipitates after 2 weeks of storage.

### Example 24

The procedure of Example 19 was repeated except that 2.7 g (0.01 mole per mole of Ce) of triethanolamine (TEA, MW=149.2, 98% solution) was added in step (2). The liquids were stored for a certain time under observation, finding no precipitates after 2 weeks of storage.

### Example 25

The procedure of Example 19 was repeated except that dilute nitric acid was added prior to filtration for adjusting to pH 2.4 in step (4). The liquids were stored for a certain time under observation, finding no precipitates after 2 weeks of storage.

### Example 26

The procedure of Example 19 was repeated except that cerium carbonate was added prior to filtration for adjusting to pH 5.4 in step (4). The liquids were stored for a certain time under observation, finding no precipitates after 2 weeks of storage.

The results are summarized in Table 3.

**Table 3**

| | Chelating substance | Concentration (molar) ratio of chelating substance/Ce | pH | Precipita tes |
|---|---|---|---|---|
| Example 19 | EDTA-2Na | 0.001 | 3.6 | nil |
| Example 20 | EDTA-2Na | 0.003 | 3.6 | nil |
| Example 21 | EDTA-2Na | 0.01 | 2.2 | nil |
| Example 22 | EDTA-2Na | 0.1 | 1.6 | nil |
| Example 23 | NTA-3Na | 0.01 | 2.5 | nil |
| Example 24 | TEA | 0.01 | 3.8 | nil |
| Example 25 | EDTA-2Na | 0.001 | 2.4 | nil |
| Example 26 | EDTA-2Na | 0.001 | 5.4 | nil |

## Claims

1. A trivalent cerium ion-containing solution comprising
(A) trivalent cerium ions, and
(B) a substance selected from the group consisting of (i) an organic acid or salt thereof having a reducing action in an acidic region and being present in a concentration giving a molar ratio relative to the cerium ions in the range from 0.001 to less than 1, (ii) a non-organic acid substance having a reducing action in an acidic region, and (iii) a substance having a chelating action in an acidic region.

2. The solution of claim 1 which is at pH 1 to 7.

3. The solution of claim 1 or 2 wherein the cerium ions are present in a concentration of 0.0001 to 2 mole/liter.

4. Solution of claim 1, 2 or 3 wherein the organic acid or salt thereof having a reducing action (i) has a reduction potential of less than or equal to 0.3 eV.

5. The solution of claim 4 wherein the organic acid or salt thereof having a reducing action (i) is selected from the group consisting of L-ascorbic acid, malic acid, citric acid, tartaric acid, oxalic acid, glucuronic acid, gallic acid, glyceric acid, hydroxybutyric acid, glyoxylic acid, and salts thereof.

6. Solution of any one of the preceding claims wherein the non-organic acid substance having a reducing action (ii) is selected from hydroxylammonium chloride, sodium thiosulfate, and ammonium fluoride.

7. Solution of any one of the preceding claims wherein the substance having a chelating action (iii) is selected from polyaminocarboxylic acids, oxycarboxylic acids, and phosphoric acids.

8. The solution of claim 7 wherein the substance having a chelating action (iii) is selected from the group consisting of EDTA (ethylenediaminetetraacetic acid),
CyDTA (t-cyclohexane-1,2-diaminetetraacetic acid),
EGTA (ethylene glycol bis(2-aminoethyl ether)-N,N,N',N'-tetraacetic acid),
DTPA (diethylenetriaminepentaacetic acid),
TTHA (triethylenetetramine-N,N,N',N',N",N",N"',N"'-hexaacetic acid),
NTA (nitrilotriacetic acid), KCN, TEA (triethanolamine),
HEDTA (N-(2-hydroxyethyl)ethylenediaminetriacetic acid),
MGDA (methylglycine diacetic acid),
GLDA (sodium dicarboxymethyl glutamic acid tetraacetate),
EDDS (trisodium ethylenediaminedisuccinate),
DHEDDA (dihydroxyethylethylenediaminediacetic acid),
PDTA (1,3-propanediaminetetraacetic acid),
HIMDA (hydroxyethyliminodiacetic acid),
ASDA (L-aspartic acid-N,N-diacetic acid),
NTMP (aminotrimethylenephosphonic acid),
HEDP (hydroxyethanediphosphonic acid), acetylacetone, and salts thereof.

9. Solution of any one of the preceding claims wherein substance (i) and/or (ii) having a reducing action is present together with the substance (iii) having a chelating action.

10. The solution of claim 9 wherein the substance having a reducing action is selected from the group consisting of L-ascorbic acid, malic acid, citric acid, tartaric acid, oxalic acid, glucuronic acid, gallic acid, glyceric acid, hydroxybutyric acid, glyoxylic acid, hydroxylammonium chloride, sodium thiosulfate, and salts of the foregoing acids.

11. The solution of any one of claims 1 to 10 which is a solution of a cerium salt of inorganic acid.

12. The solution of any one of claims 1 to 10 which is an aqueous solution of a cerium salt of inorganic acid.

13. A corrosion inhibitor comprising the cerium ion-containing solution of any one of claims 1 to 12.

14. The preparation of a solution according to any one of claims 1 to 12 by combining components (A),(B) thereof, preferably starting with (A) in the form of a cerium salt of an inorganic acid.

15. The use,
in the preparation or use of a solution of (A) trivalent cerium ions,
of (B) substance selected from (i) organic acids and salts thereof having a reducing action in an acidic region and being present in a concentration giving a molar ratio relative to the cerium ions in the range from 0.001 to less than 1, (ii) non-organic acid substances having a reducing action in an acidic region, and (iii) substances having a chelating action in an acidic region; optionally in accordance with any one of claims 2 to 12,
for stabilising the trivalent cerium ions against precipitation or conversion to tetravalent state.
